# FASCICULE DE BREVET EUROPEEN

(11) **EP 3 175 525 B1**
(45) Date de publication et mention de la délivrance du brevet: **21.03.2018**
(21) Numéro de dépôt: 15742255.1
(22) Date de dépôt: 27.07.2015
(51) Int. Cl.: H02G 5/06

(54) **APPAREILLAGE ÉLECTRIQUE COMPORTANT DES MOYENS AMÉLIORÉS DE FIXATION D'UN SUPPORT ISOLANT**
SCHALTANLAGE MIT VERBESSERTEN BEFESTIGUNGSMITTELN FÜR EINEN ISOLIERENDEN STÜTZER
ELECTRICAL SWITCHGEAR WITH IMPROVED FASTENING MEANS FOR AN INSULATING SUPPORT

(30) Priorité: 28.07.2014 FR 1457297
(43) Date de publication de la demande: 07.06.2017
(73) Titulaire: General Electric Technology GmbH, 5400 Baden (CH)
(72) Inventeur: SERAIN, Mathias, F-73190 Saint Baldoph (FR); BARBE, Tommy, 73100 Aix les Bains (FR); DE-BRITO, Luis, F-74940 Annecy Le Vieux (FR); CAVALLIER, Clément, F-74940 Annecy Le Vieux (FR); SOUCHAL, Samuel, F-73800 Francin (FR)
(74) Mandataire: Cleary, Fidelma
(86) Numéro de dépôt international: PCT/EP2015/067110
(87) Numéro de publication internationale: WO 2016/016166

(56) Documents cités:
- JP-U- S58 193 805
- JP-U- S60 132 133
- US-A- 2 293 310
- US-A- 2 396 131
- US-A- 3 459 876
- US-A- 3 654 378

## Description

### DOMAINE TECHNIQUE

L'invention concerne un appareillage électrique comportant au moins un conducteur agencé dans une cuve de l'appareillage et comportant un support isolant monté à l'intérieur de la cuve, qui maintient le conducteur à distance constante de la paroi de la cuve.

L'invention concerne plus particulièrement un appareillage qui est réalisé pour faciliter le montage du support isolant dans la cuve.

### ÉTAT DE LA TECHNIQUE ANTÉRIEURE

Un appareillage électrique à isolation gazeuse à moyenne, haute, ou très haute tension comporte principalement une cuve métallique remplie d'un gaz diélectrique et comporte un ou plusieurs conducteurs électriques agencés dans la cuve, à distance l'un de l'autre et à distance de la paroi de la cuve.

Pour maintenir chaque conducteur à distance de la paroi de la cuve, l'appareillage comporte un support réalisé en matériau isolant, qui est monté à l'intérieur de la cuve et qui porte le conducteur.

Selon un premier mode de réalisation connu, le support isolant est fixé à la cuve par bridage, c'est-à-dire qu'il comporte une partie périphérique qui est serrée axialement entre deux parties de la cuve ou bien entre deux cuves adjacentes.

Selon un autre mode de réalisation du montage du support dans la cuve, des plots de montage du support isolant sont fixés sur la face intérieure de la cuve. Ces plots comportent des moyens de fixation du support isolant et des moyens pour leur montage sur la cuve.

Ce mode de réalisation permet de monter le support isolant en tout endroit de la cuve, c'est-à-dire à distance de ses extrémités. Cependant, il implique de réaliser des usinages particuliers à l'intérieur de la cuve pour accueillir les moyes de fixation des moyens de montage.

L'accessibilité est généralement difficile dans le volume intérieur de la cuve, ce qui rend ces usinages difficiles, et par conséquent couteux.

JP358193805U divulgue un appareillage électrique selon ce mode de réalisation et ayant les caractéristiques du préambule de la revendication 1.

US 2396131A, US 2293310A, US 3459876A, JP S60132133U et US 3654378A divulguent d'autres méthodes de fixation de supports isolants sur la cuve d'appareillage électrique de transport de courant électrique. L'invention a pour but de proposer un ensemble faisant partie d'un appareillage électrique, qui est réalisé pour faciliter le montage du support isolant dans la cuve.

### EXPOSÉ DE L'INVENTION

L'invention concerne un appareillage électrique de ligne de transport de courant électrique à moyenne, haute ou très haute tension comportant une cuve métallique; au moins un conducteur agencé à l'intérieur de la cuve qui s'étend parallèlement à un axe principal de la cuve ; un support en matériau isolant qui s'étend dans un plan radial par rapport audit axe principal de la cuve, qui est relié au conducteur d'une part et à la cuve d'autre part; et des plots de liaison du support avec la cuve qui sont montés sur la cuve,
caractérisé en ce que chaque plot est monté radialement au travers d'un orifice associé de la cuve qui est débouchant radialement vers l'extérieur et comporte une extrémité radiale interne qui coopère avec le support.

Le montage de chaque plot au travers d'un orifice débouchant vers l'extérieur est ainsi facilité puisque l'accès au plot est toujours permis depuis l'extérieur.

En outre, l'usinage peut se faire depuis l'extérieur, il n'y a alors pas de contraintes relatives à l'encombrement de la machine réalisant l'usinage de l'orifice.

De préférence, l'extrémité radiale externe de chaque plot forme une tête qui est reçue dans une partie de l'orifice et qui est en appui radialement vers l'intérieur contre une face de fond de cette partie de l'orifice.

De préférence, un joint d'étanchéité est situé entre la tête du plot et la face de fond de cette partie de l'orifice

De préférence, l'extrémité radiale interne de chaque plot est reçue dans un insert porté par le support.

De préférence, chaque insert comporte une cavité dans laquelle l'extrémité radiale interne de chaque plot est reçue.

De préférence, l'extrémité radialement interne du plot est de forme générale sphérique.

De préférence, chaque plot et l'insert associé sont réalisés en un matériau métallique et en ce qu'un élément élastique relie électriquement le plot à l'insert associé.

De préférence, chaque plot comporte un tronçon intermédiaire qui est reçu dans une première partie de l'orifice pour le montage du plot sur la cuve.

De préférence, le tronçon intermédiaire de chaque plot comporte un filetage qui coopère avec un taraudage complémentaire formé dans la première partie de l'orifice.

De préférence, l'appareillage comporte une pluralité de plots répartis de manière régulière autour dudit axe principal de la cuve.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section axiale d'un appareillage électrique comportant un support monté selon l'invention ;
- la figure 2 est une vue similaire à celle de la figure 1, montrant un appareillage comportant un seul conducteur ;
- la figure 3 est un détail à plus grande échelle montrant le montage d'un plot sur la cuve.

### EXPOSÉ DÉTAILLÉ DE MODES DE RÉALISATION PARTICULIERS

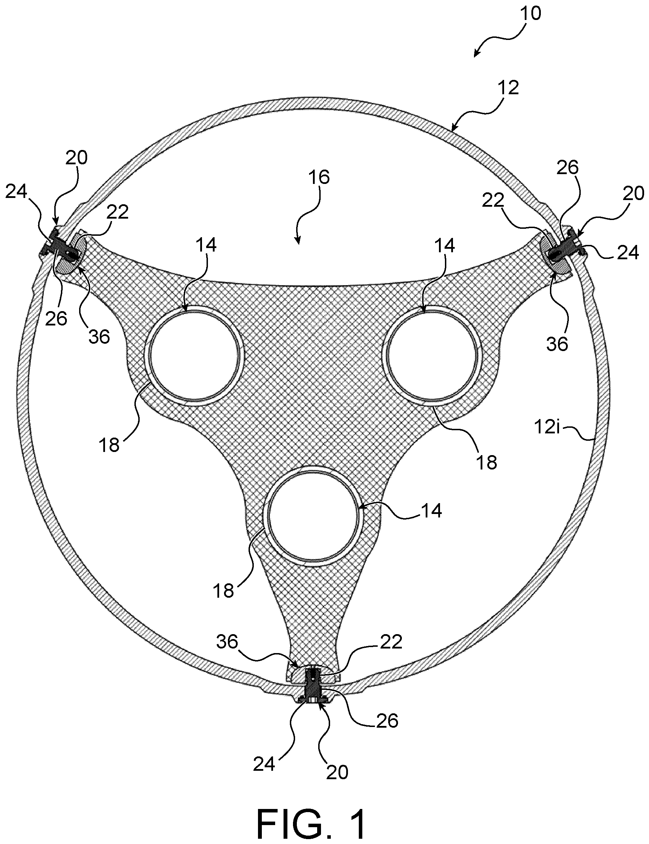

On a représenté à la figure 1 une section d'un appareillage électrique 10 comportant une cuve externe 12 métallique et des conducteurs 14. Ici l'appareillage 10 est adapté à une installation électrique triphasée, il comporte par conséquent trois conducteurs 14. Chaque conducteur 14 est associé à une phase de l'installation électrique.

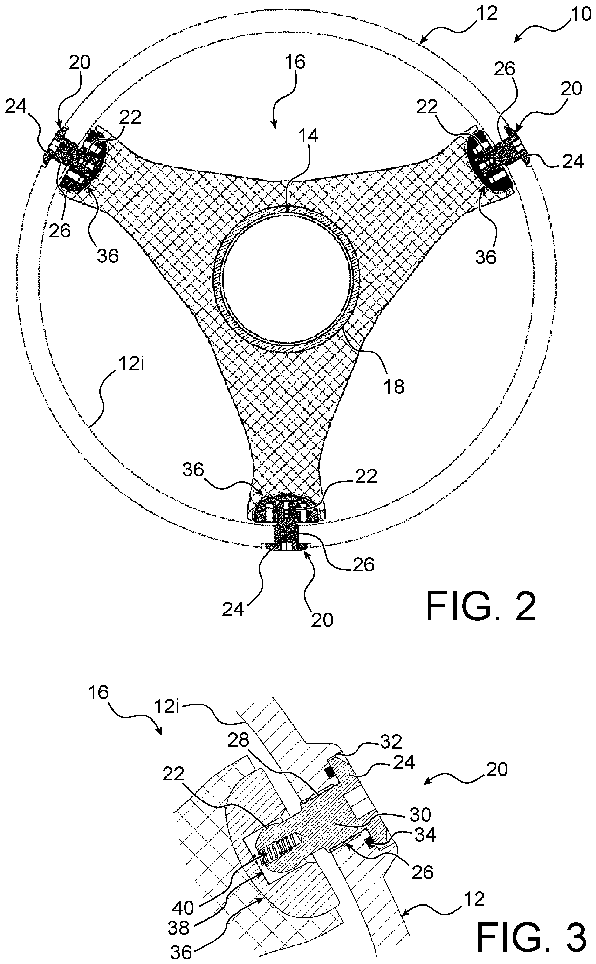

Selon une variante de réalisation représentée à la figure 2, l'appareillage 10 est adapté à une installation électrique monophasée, il comporte alors un seul conducteur 14.

L'appareillage 10 comporte aussi un support 16 en matériau isolant qui permet de maintenir chaque conducteur 14 à distance de la paroi de la cuve 12.

Ce support 16 permet aussi de maintenir les conducteurs 14 à distance l'un de l'autre lorsque l'appareillage 10 comporte plusieurs conducteurs 14.

Le support 1 comporte à cet effet un orifice 18 dans lequel un conducteur 14 est reçu.

Le support 16 est relié à la cuve 12 en plusieurs points. De préférence, il est relié à la cuve 12 en trois points répartis de manière régulière autour d'un axe principal central de la cuve 12, c'est-à-dire ici à environ 120 degrés.

La liaison du support 16 avec la cuve 12 en chacun de ces points est réalisée par l'intermédiaire d'un plot 20 qui est fixé à la cuve 12 et qui fait saillie radialement vers l'intérieur par rapport à la face interne 12i de la cuve 12.

L'extrémité radiale interne 22 du plot 20 est reliée au support 16, l'extrémité radiale externe 24 du plot 20 est reliée à la cuve 12.

Comme on peut le voir plus en détails à la figure 3, la cuve 12 comporte un orifice 26 orienté principalement radialement par rapport à l'axe principal de la cuve 12, qui traverse la paroi de la cuve 12 et au travers duquel le plot 20 est monté.

Le plot 20 est monté dans l'orifice 26 associé depuis l'extérieur de la cuve 12.

L'orifice 26 est ainsi formé pour permettre un tel montage. La réalisation de l'orifice s'effectue ainsi par usinage depuis l'extérieur de la cuve 12. L'outillage et l'accès pour réaliser cet usinage de la cuve 12 sont ainsi simplifiés.

L'orifice 26 est réalisé en deux parties.

Une première partie 28 de l'orifice 26, radialement interne, consiste en un trou taraudé, qui reçoit un tronçon intermédiaire fileté 30 du plot 20.

La deuxième partie 32 de l'orifice 26 est une partie circulaire de diamètre supérieur au diamètre de la première partie 28 de l'orifice 26 et qui est débouchante radialement vers l'extérieur. Cette deuxième partie 32 forme un lamage qui reçoit l'extrémité radiale externe 24 du plot 20.

L'extrémité externe 24 du plot 20 consiste en un disque de diamètre supérieur au diamètre du tronçon intermédiaire 30 du plot 20. Elle comporte une face qui vient en appui radialement vers l'intérieur contre une face de fond en vis-à-vis de la deuxième partie 32 de l'orifice 26.

Un joint d'étanchéité 34 est comprimé entre la face d'appui de l'extrémité externe 24 du plot 20 et la face de fond en vis-à-vis de la deuxième partie 32 de l'orifice 26, pour garantir une obturation étanche aux gaz de l'orifice 26.

L'extrémité radiale interne 22 du plot 20 est située dans le volume intérieur de la cuve 12 et fait saillie radialement par rapport à la face interne 12i de la cuve 12. Elle est introduite dans ce volume intérieur au travers de l'orifice 26.

Pour cela, le plus grand diamètre de cette extrémité radiale interne 22 est inférieur au plus petit diamètre intérieur de l'orifice 26, notamment au diamètre interne de la première partie 30.

L'extrémité radiale interne 22 du plot 20 est reçue dans une cavité associée formée dans le support isolant 16.

De préférence, le support isolant 16 comporte un insert 36 métallique qui reçoit l'extrémité radiale interne 22 du plot 20.

Cet insert 36 comporte une cavité 38 débouchante radialement vers l'extérieur, dans laquelle l'extrémité radiale interne 22 du plot 20 est reçue.

La forme de l'extrémité radiale interne 22 du plot 20 est conçue pour permettre de compenser les défauts de coaxialité entre la cavité 38 de l'insert 36 et le plot 20.

De préférence, l'extrémité radiale interne 22 du plot 20 est de forme générale sphérique, c'est-à-dire globalement bombée.

Le plot 20 et l'insert 36 étant tous les deux métalliques, il est préférable qu'ils soient maintenus au même potentiel électrique, afin de limiter la formation d'arcs électriques entre eux.

Pour cela, ils sont reliés par un élément élastique 40, qui consiste ici en un ressort hélicoïdal de compression qui est en appui contre le fond de la cavité 38 et qui est monté dans un trou formé dans l'extrémité radiale interne 22 du plot 20.

## Revendications

1. Appareillage (10) électrique de ligne de transport de courant électrique à moyenne, haute ou très haute tension comportant une cuve (12) métallique; au moins un conducteur (14) agencé à l'intérieur de la cuve (12) qui s'étend parallèlement à un axe principal de la cuve (12); un support (16) en matériau isolant qui s'étend dans un plan radial par rapport audit axe principal de la cuve (12), qui est relié au conducteur (14) d'une part et à la cuve (12) d'autre part; et des plots (20) de liaison mécanique du support (16) avec la cuve (12) qui sont montés sur la cuve (12),
**caractérisé en ce que** chaque plot (20) est monté radialement au travers d'un orifice (26) associé de la cuve (12) qui est débouchant radialement vers l'extérieur et comporte une extrémité radiale interne qui coopère avec le support (16).

2. Appareillage (10) selon la revendication précédente, **caractérisé en ce que** l'extrémité radiale externe (24) de chaque plot (20) forme une tête qui est reçue dans une partie (32) de l'orifice (26) et qui est en appui radialement vers l'intérieur contre une face de fond de cette partie (32) de l'orifice (26).

3. Appareillage (10) selon la revendication précédente, **caractérisé en ce qu'**un joint d'étanchéité (34) est situé entre la tête (24) du plot (20) et la face de fond de cette partie (32) de l'orifice (26)

4. Appareillage (10) selon l'une quelconque des revendications précédentes, **caractérisé en ce que** l'extrémité radiale interne (22) de chaque plot (20) est reçue dans un insert (36) porté par le support (16).

5. Appareillage (10) selon la revendication précédente, **caractérisé en ce que** chaque insert (36) comporte une cavité (38) dans laquelle l'extrémité radiale interne (22) de chaque plot (20) est reçue.

6. Appareillage (10) selon l'une quelconque des revendications 4 ou 5, **caractérisé en ce que** l'extrémité radialement interne (22) du plot (20) est de forme générale sphérique.

7. Appareillage (10) selon l'une quelconque des revendications 4 à 6, **caractérisé en ce que** chaque plot (20) et l'insert (36) associé sont réalisés en un matériau métallique et **en ce qu'**un élément élastique (40) relie électriquement le plot (20) à l'insert (36) associé.

8. Appareillage (10) selon l'une quelconque des revendications précédentes, **caractérisé en ce que** chaque plot (20) comporte un tronçon intermédiaire (30) qui est reçu dans une première partie de l'orifice (26) pour le montage du plot (20) sur la cuve (12).

9. Appareillage (10) selon la revendication précédente, **caractérisé en ce que** le tronçon intermédiaire (30) de chaque plot (20) comporte un filetage qui coopère avec un taraudage complémentaire formé dans la première partie de l'orifice (26).

10. Appareillage (10) selon l'une quelconque des revendications précédentes, **caractérisé en ce qu'**il comporte une pluralité de plots (20) répartis de manière régulière autour dudit axe principal de la cuve (12).

## Patentansprüche

1. Elektrisches Gerät (10) einer Transportleitung elektrischen Stromes mittlerer, hoher oder sehr hoher Spannung, umfassend einen metallischen Behälter (12); mindestens einen Stromleiter (14), der innerhalb des Behälters (12) angeordnet ist, der sich parallel zu einer Hauptachse des Behälters (12) erstreckt; einen Träger (16) aus isolierendem Material, der sich in einer radialen Ebene im Verhältnis zu der Hauptachse des Behälters (12) erstreckt, der mit dem Stromleiter (14) einerseits und mit dem Behälter (12) andererseits verbunden ist; und Kontakte (20) zur mechanischen Verbindung des Trägers (16) mit dem Behälter (12), die an dem Behälter (12) montiert sind,
**dadurch gekennzeichnet, dass** jeder Kontakt (20) radial durch eine Öffnung (26) hindurch montiert ist, die dem Behälter (12) zugeordnet ist, die radial nach außen mündet und ein inneres radiales Ende umfasst, das mit dem Träger (16) zusammenwirkt.

2. Gerät (10) nach dem vorhergehenden Anspruch, **dadurch gekennzeichnet, dass** das äußere radiale Ende (24) von jedem Kontakt (20) einen Kopf ausbildet, der in einem Teil (32) der Öffnung (26) aufgenommen wird, und der radial zu der Innenseite gegen eine Bodenseite dieses Teils (32) der Öffnung (26) anliegt.

3. Gerät (10) nach dem vorhergehenden Anspruch, **dadurch gekennzeichnet, dass** eine Dichtung (34) zwischen dem Kopf (24) des Kontaktes (20) und der Bodenseite dieses Teiles (32) der Öffnung (26) liegt.

4. Gerät (10) nach einem der vorhergehenden Ansprüche, **dadurch gekennzeichnet, dass** das innere radiale Ende (22) von jedem Kontakt (20) in einem Einsatz (36) aufgenommen wird, der durch den Träger (16) getragen wird.

5. Gerät (10) nach dem vorhergehenden Anspruch, **dadurch gekennzeichnet, dass** jeder Einsatz (36) eine Ausnehmung (38) umfasst, in welcher das innere radiale Ende (22) von jedem Kontakt (20) aufgenommen wird.

6. Gerät (10) nach einem der Ansprüche 4 oder 5, **dadurch gekennzeichnet, dass** das innere radiale Ende (22) des Kontaktes (20) eine im Allgemeinen kugelförmige Gestalt hat.

7. Gerät (10) nach einem der Ansprüche 4 bis 6, **dadurch gekennzeichnet, dass** jeder Kontakt (20) und der zugeordnete Einsatz (36) aus einem metallischen Material hergestellt sind, und dass ein elastisches Element (40) den Kontakt (20) elektrisch mit dem zugeordneten Einsatz (36) verbindet.

8. Gerät (10) nach einem der vorhergehenden Ansprüche, **dadurch gekennzeichnet, dass** jeder Kontakt (20) einen Zwischenabschnitt (30) umfasst, der in einem ersten Teil der Öffnung (26) für die Montage des Kontaktes (20) an dem Behälter (12) aufgenommen wird.

9. Gerät (10) nach dem vorhergehenden Anspruch, **dadurch gekennzeichnet, dass** der Zwischenabschnitt (30) von jedem Kontakt (20) ein Außengewinde umfasst, das mit einem komplementären Innengewinde zusammenwirkt, das in einem ersten Teil der Öffnung (26) ausgebildet ist.

10. Gerät (10) nach einem der vorhergehenden Ansprüche, **dadurch gekennzeichnet, dass** es eine Vielzahl von Kontakten (20) umfasst, die auf regelmäßige Weise um die Hauptachse des Behälters (12) herum verteilt sind.

## Claims

1. Electrical equipment (10) for a line transmitting medium, high or very high voltage electric current comprising a metal vessel (12), at least one lead (14) arranged inside the vessel (12) which extends parallel to a main axis of the vessel (12), a carrier (16) made of insulating material which lies in a radial plane relative to said main axis of the vessel (12), which is connected to the lead (14) on the one hand and to the vessel (12) on the other hand and pins (20) for mechanical connection of the carrier (16) to the vessel (12), which are mounted on the vessel (12), **characterised in that** each pin (20) is mounted radially through an associated aperture (26) of the vessel (12), which radially opens to the outside and comprises an internal radial end which co-operates with the carrier (16).

2. Equipment (10) according to the preceding claim, **characterised in that** the external radial end (24) of each pin (20) forms a head which is accepted in a portion (32) of the aperture (26) and which bears radially inwards against a base surface of this portion (32) of the aperture (26).

3. Equipment (10) according to the preceding claim, **characterised in that** a seal (34) is situated between the head (24) of the pin (20) and the base surface of this portion (32) of the aperture (26).

4. Equipment (10) according to any one of the preceding claims, **characterised in that** the internal radial end (22) of each pin (20) is accepted in an insert (36) supported by the carrier (16).

5. Equipment (10) according to the preceding claim, **characterised in that** each insert (36) comprises a cavity (38) wherein the internal radial end (22) of each pin (20) is accepted.

6. Equipment (10) according to either of claims 4 or 5, **characterised in that** the radially internal end (22) of the pin (20) is generally spherical.

7. Equipment (10) according to any one of claims 4 to 6, **characterised in that** each pin (20) and the associated insert (36) are made of a metal material and **in that** an elastic element (40) electrically connects the pin (20) to the associated insert (36).

8. Equipment (10) according to any one of the preceding claims, **characterised in that** each pin (20) comprises an intermediate section (30) which is accepted in a first portion of the aperture (26) for mounting the pin (20) on the vessel (12).

9. Equipment (10) according to the preceding claim, **characterised in that** the intermediate section (30) of each pin (20) comprises a screw thread which co-operates with a complementary internal screw thread formed in the first portion of the aperture (26).

10. Equipment (10) according to any one of the preceding claims, **characterised in that** it comprises a plurality of pins (20) evenly distributed about said main axis of the vessel (12).
